# EUROPEAN PATENT SPECIFICATION

(11) **EP 1 693 948 B1**
(45) Date of publication and mention of the grant of the patent: **09.04.2008**
(21) Application number: 05003719.1
(22) Date of filing: 22.02.2005
(51) Int. Cl.: H02M 3/335

(54) **Secondary side post regulator with PWM**
Sekundärseitiger Nachregler mit PBM
Postrégulateur coté secondaire avec MDI

(43) Date of publication of application: 23.08.2006
(73) Proprietor: STMicroelectronics S.r.l., 20041 Agrate Brianza (Milano) (IT)
(72) Inventor: Librizzi, Fabrizio, 95030 Gravina di Catania (Catania) (IT)
(74) Representative: Bosotti, Luciano

(56) References cited:
- EP-A- 0 939 483
- US-A- 4 825 347
- US-A- 5 955 910

## Description

### Field of the invention

The invention relates to techniques for controlling voltages in electronic devices.

The invention was devised by paying specific attention to techniques for controlling multiple voltages.

### Description of the related art

Several electronic devices require two or more isolated and tightly regulated voltages. For example, microprocessors require a precisely controlled supply voltage of 3.3 V or lower, as well as the traditional 5 V supply.

Furthermore, electronic products continue to decrease in size, demanding higher power densities and higher efficiency. The combination of these trends presents a difficult challenge for design engineers.

Choosing the best approach to generate these multiple voltages requires a deep understanding of the strengths and the weaknesses of the available techniques and of how each technique affects an application. The main selection criteria are cost, power conversion efficiency, and simplicity of manufacture.

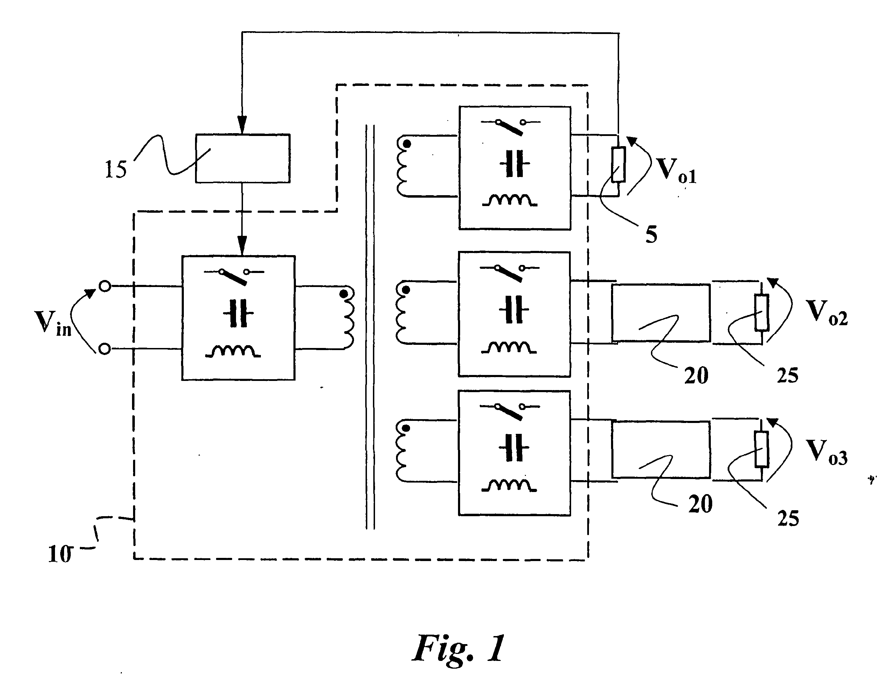

A configuration of a conventional Switched Mode Power Supply is shown in Figure 1, where a main output voltage Vₒ₁, measured on a utilizer device (load) 5, is controlled by a fixed frequency Pulsed Width Modulation (PWM) structure, designated 10 as a whole. A Pulsed Width Modulation controller 15 senses the voltage Vₒ₁ and regulates it by reacting to any variations in an input voltage Vᵢₙ in a typical closed loop arrangement. Additionally, the main output voltage Vₒ₁ is regulated on the basis of load variations, and in particular depending on the variations in the load device 5.

In the arrangement shown in Figure 1, any variation in input voltage Vᵢₙ is balanced by the action of the Pulsed Width Modulation structure 10 for all the outputs. Conversely, any change in the output Vₒ₂ or in the output Vₒ₃ is not taken into account by the Pulsed Width Modulation controller 15 because the two outputs Vₒ₂ and Vₒ₃ are operated essentially in an open loop configuration.

In order to keep the output voltages Vₒ₂ and Vₒ₃ under regulation, even with respect to load changes, a so-called "post-regulator" 20 is needed in the second and in the third branch of the Figure 1.

The most popular "post-regulator" types include linear regulators, post DC/DC (Direct Current) converters, and Magnetic Amplifiers (mag-amps). All these solutions exhibit advantages and drawbacks as well.

A linear regulator is a very simple solution, inexpensive and easy to design. A major disadvantage lies in poor efficiency, and for that reason linear regulators are used in "very low" and "low" current applications, where they can be considered the best solution.

Cascading DC/DC converters to the outputs is another method to regulate multiple output voltages. The main advantages of this solution are efficiency, good voltage regulation performance and current capability. However, this technique presents several drawbacks, first of all the supplementary cost of an additional complete DC/DC converter, which includes power switches, inductors, capacitors and controllers. Furthermore, an additional DC/DC converter generates added noise and added ripple current, which poses stricter requirements in terms of filter components or synchronization with the main Pulsed Width Modulation.

Magnetic Amplifiers can be described as "post-regulators" with a programmable delay switch. These probably represent the most common solution for "medium-power" and "high-power" post regulation. The main component of a Magnetic Amplifier regulator is a saturable reactor that acts as a magnetic switch, exhibiting high-impedance characteristics during the blocking period (switch "off") and low-impedance characteristics when in saturation (switch "on"). A Magnetic Amplifier has usually associated a simple control circuitry, and exhibits very good and "rugged" regulation performance. The main drawbacks of Magnetic Amplifiers include poor regulation at reduced or no load, limitations on switching frequency and size.

Another kind of solution is a Pulsed Width Modulation (PWM) "post-regulator". This solution is suitable for any range of power applications, but is more convenient when used in "medium-power" and "high-power" applications, so this is an alternative to the Magnetic Amplifier circuit. This device is a Pulsed Width Modulation controller synchronized with the primary Pulsed Width Modulation controller and working in leading edge modulation, using a switch (bipolar transistor, MOSFET, etc.) in order to block the voltage on the secondary winding of the transformer. The advantages of this approach with respect to the solutions involving a Magnetic Amplifier are: lower cost, lower size, higher reliability, and better performance. The circuitry necessary to control the switch may be complicated, but the eventual integration of this circuitry in one chip makes this drawback negligible.

Certain devices already exist in the market that implement this kind of approach. Exemplary of these are CS5101 by ON Semiconductor (to which US-A-5 955 910 corresponds), and Unitrode UCC1583/2583/3583 by Texas Instruments.

The operation mode of the Pulsed Width Modulation post-regulator controller is similar to the operation mode of a "buck" converter, which is a switching dc/dc converter that converts a dc input voltage to an output voltage with a lower DC value. The Pulsed Width Modulation post-regulator controller controls a switch, which has the capability of blocking some values of the input voltage, providing a smaller duty-cycle in the output voltage than in the input voltage. The value of the voltage obtained via blocking depends on the controller feedback loop that controls the output voltage by turning the output voltage on and off.

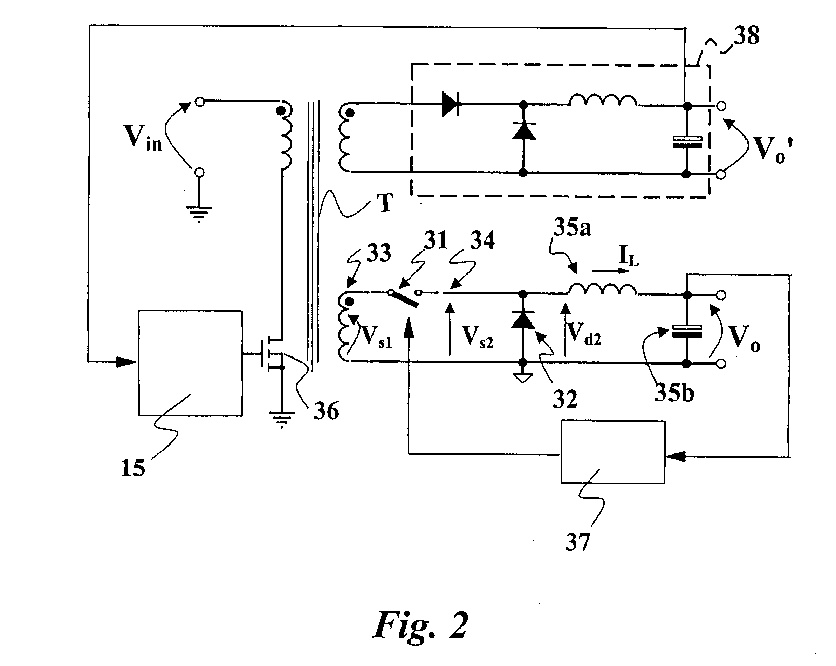

Figure 2 shows a typical application in a multiple-output forward converter of the type considered in the foregoing, which can be considered as a particular implementation of the system depicted in Figure 1. There, a voltage V_{d2} across a diode 32 is a Pulse Width Modulated (PWM) waveform able to provide a DC output Vₒ. More in detail, associated with the diode 32 is a LC low-pass filter including an inductor 35a and a capacitor 35b. The voltage Vₒ is established across the capacitor 35b.

The pulse width of the voltage V_{d2} across the diode 32 is controlled by the duty-cycle of a main electronic switch 36, and by the operation of a controlled switch 31. Specifically, the switch 36 is connected in series to the primary winding of a transformer T connected to the input voltage Vᵢₙ. The transformer T includes two secondary windings one of which, indicated 33 in Figure 2, produces a voltage vₛ₁ which is transferred to the diode 32 via the controlled switch 31.

When the controlled switch 31 is off (i.e. open), the switch blocks (i.e. separates) the voltage Vₛ₁ across the secondary winding 33 of the transformer T from the output LC filter (35a, 35b), presenting high impedance.

When the controlled switch 31 is on (i.e. closed), its impedance is very low and it blocks very little voltage, and the voltage Vₛ₁ appears across the catch diode 32.

While the voltage output Vₒ is primarily controlled by the operation of a post-regulator controller 37 that controls the switch 31, another voltage output Vₒ' produced at a substantially similar circuit 38 associated with a further secondary winding of the transformer T is controlled by a primary Pulsed Width Modulation circuit 15 acting on the switch 36.

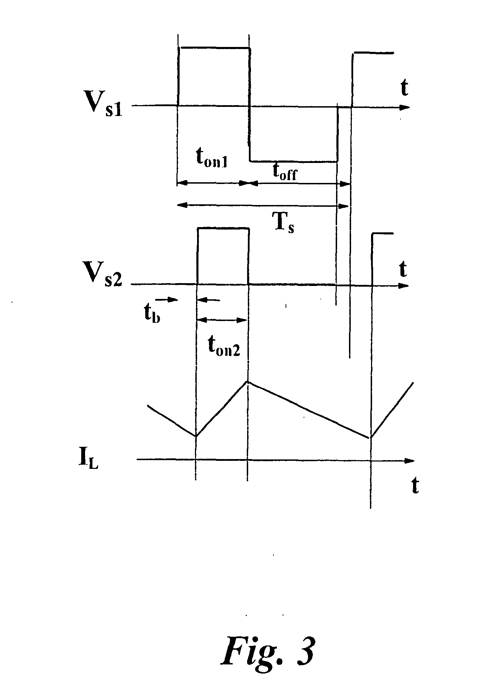

Figure 3 shows two waveforms Vₛ₁ and Vₛ₂ of the post-regulator controller circuit 37 of Figure 2, and the associated state of the switch for a Continuous Inductor Conduction Mode (CCM). The voltage Vₛ₁ is the voltage waveform present across the secondary winding 33 of the transformer, while tₒₙ₁ and toff are the "on-time" and the "off-time" of the primary switch 36, respectively, and finally Tₛ represents the entire switching period. A parameter T_{b} represents the time during which the controlled switch 31 is off. The period during which the controlled switch 31 is on and the input to output power transfer occurs is represented by tₒₙ₂. The positive voltage Vₛ₁ makes a current I_{L}, in an inductor 35, to rise. During the test of the period (t_{off}+t_{b}), the controlled switch 31 is off.

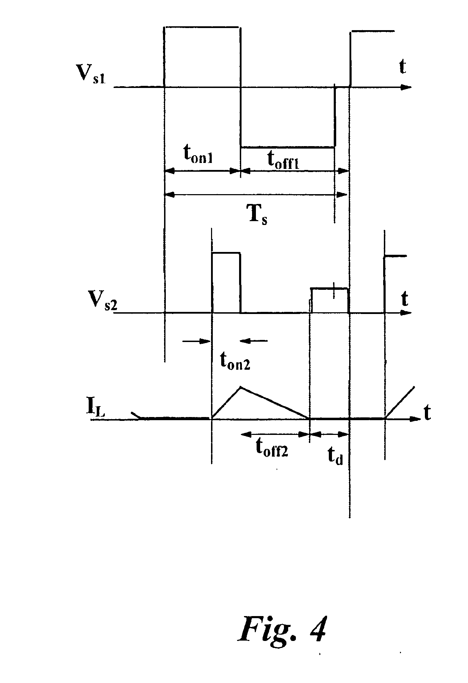

A Discontinuous Inductor Conduction Mode (DCM) situation is shown in Figure 4. All the considerations made for the Continuous Inductor Conduction Mode (CICM) operation mode are still valid. In this case, neglecting parasitic elements, a positive voltage equal to Vₒ appears in the V_{d2} voltage during the dead time (t_{d}) in which the inductor current I_{L} is zero.

This kind of post-regulator can be used also in double-ended forward-derived topologies as push-pull, half-bridge, and full-bridge.

The CS5101 device already mentioned in the foregoing includes the functionalities to implement the Pulsed Width Modulation post regulation. This device in fact implements all the functions assumed to be performed by the block 37 in Figure 2.

Apart of the standard Pulsed Width Modulation blocks, the device includes:
- a bootstrap drive for the switch;
- an over current protection control implemented with a typical operational amplifier.

Other detailed information can be found in the following documents:
- ON Semiconductor Datasheet: CS5101, Secondary Side Post regulator (SSPR) for Switching Power Supplies with Multiple Outputs;
- US-A-5 955 910;
- Texas Instruments-Unitrode Datasheet: UCC1583, UCC2583, UCC3583, Switch Mode Secondary Side Post Regulator;
- Texas Instruments-Unitrode Datasheet: UCC1584, UCC2584, UCC3584, Switch Mode Secondary Side Post Regulator; and
- US-A-5 986 911.

### Object and summary of the invention

While such prior art arrangements are per se capable of providing satisfactory results, the need is felt for an improved solution adapted to ensure a simple and low-cost circuit for controlling multi-output voltages.

The object of the invention is thus to provide a fully satisfactory response to this need.

According to the present invention, that object is achieved by means of a circuit having the features set forth in the claims that follow.

The claims are an integral part of the disclosure of the invention provided herein.

A preferred embodiment of the exemplary circuit described herein is adapted to be used in multiple-output Switched Mode Power Supplies in order to achieve tight regulation of an auxiliary output by using a switch controlled by a Pulse Width Modulated controller synchronized with a primary Pulse Width Modulated controller. The controlled switch has the capability of blocking a certain part of the voltage value applied across it. The integrated circuit is able to control the switch with a Leading Edge Pulse Width Modulation technique in order to guarantee the output voltage regulation.

A preferred embodiment of the integrated circuit described herein also controls a free-wheeling switch (usually an N-channel MOSFET) to implement a synchronous rectification technique and so improving the efficiency of the converter. During light load operation the free-wheeling switch is turned off in order to prevent reverse current conduction.

The solution described herein extends and improves performance of prior art devices such as e.g. the CS5101 device, as described in US-5 955 910, by introducing dedicated pins to implement a synchronous rectification function while at the same time assuring proper operation in discontinuous conduction mode.

The arrangement described herein includes all the functionalities of prior art devices such as e.g. the CS5101 device, but improves their performance by including:
- dedicated driving for free-wheeling synchronous MOSFET; this improves the overall efficiency of the converter;
- shoot-through protection circuit to avoid short circuit on the secondary side between the control switch and the free-wheeling MOSFET; and
- a dedicated pin to select the output current value at which the synchronous rectifier starts to be driven: this allows correct operation in Discontinuous Conduction Mode.

### Brief description of the annexed drawings

The invention will now be described, by way of example only, with reference to the enclosed figures of drawing, wherein:
- Figures 1 to 4, related to the prior art, have already been described in the foregoing;
- Figure 5 shows how the arrangement of Figure 2 can be modified to take full advantage of the solution described herein;
- Figure 6 shows an exemplary embodiment of the solution described herein;
- Figure 7 shows an exemplary timing of two drive signals generated in the arrangement of figure 6.

### Detailed description of preferred embodiments of the invention

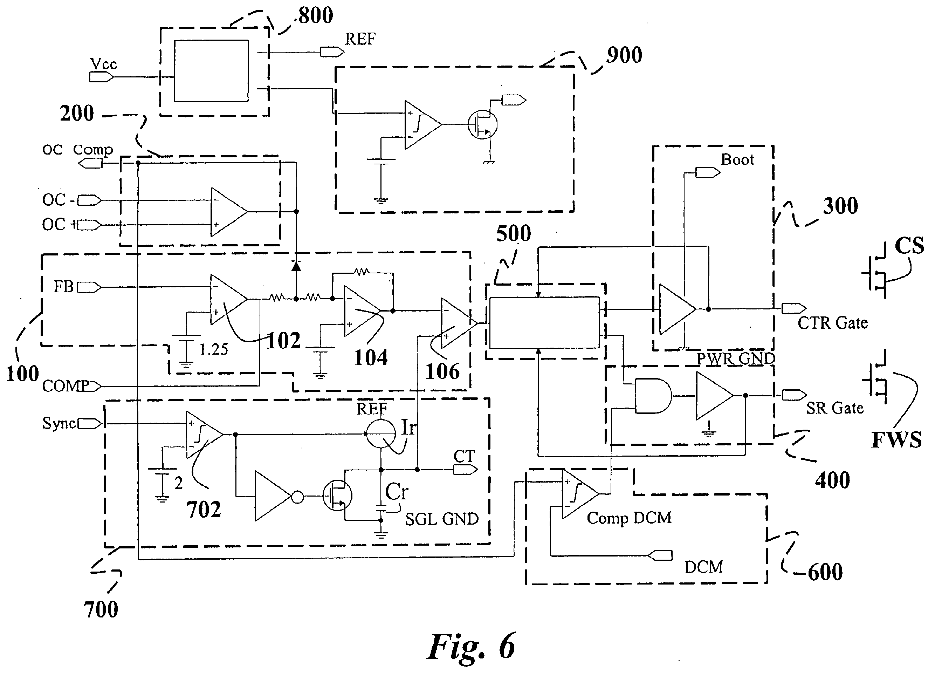

An exemplary embodiment of the arrangement described herein is in the form of an integrated circuit whose block diagram is shown in Figure 6.

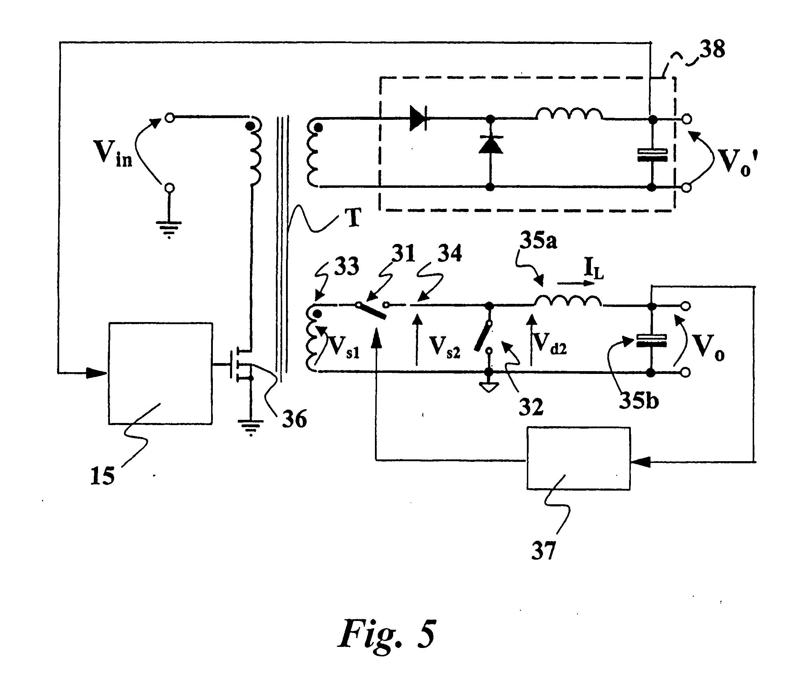

Essentially the integrated circuit in question can be used within the framework of an arrangement of the type shown in Figure 2, preferably modified as shown in Figure 5, i.e. by implementing a synchronous rectification function by means of a free-wheeling switch i.e. an active controlled switch that replaces the diode 32 of Figure 2 while at the same time assuring proper operation in discontinuous conduction mode.

Stated otherwise, the main purpose of the circuit shown in Figure 6 is to synchronize/control operation of the switch 31 and of the switch 32 in order to improve the overall efficiency of the system according to the well-known synchronous rectification technique.

The block diagram of Figure 6 includes the following elements:
- a standard Pulse Width Modulated architecture 100, adapted to be connected to an input terminal FB to be synchronized with the voltage on the secondary winding of a Switched Mode Power Supply (not shown, but of known type - see the introductory portion of this description); this architecture includes a voltage reference 102, an error amplifier 104 and a PWM comparator 106;
- an over current error amplifier 200, which, adapted to be connected to an output current sense resistor, via terminals OC- and OC+ and operating in a typical over current control circuit;
- a drive circuit 300 for a control switch CS (e.g. the switch 31 of Figures 2 and 5) to be connected to a terminal CTR Gate and including a bootstrap terminal (Boot) to drive a N-Channel MOSFET in high side;
- a low-side driving circuit 400 including a terminal (SR Gate) to drive a free-wheeling synchronous rectified active switch FWS (i.e. the switch 32 shown in Figure 5 that replaces the diode shown in the same position in Figure 2);
- a shoot-through protection circuit 500 which avoids any cross conduction between the two switches CS and FWS (that are the controlled switch 31 and the free-wheeling synchronous switch 32 shown in Figure 5);
- a dedicated circuit 600 to select the level of the output current at which the synchronous switch must be enabled - this level is sensed on an input terminal DCM;
- a ramp generator circuit 700 whose detailed operation is described below;
- an internal power supply block 800 that supplies power to the whole circuit; and
- a protection circuit 900 that keeps the control switch off when the circuit is not supplied correctly (for example during start-up).

Device synchronization is accomplished through a Sync pin included in the ramp generator circuit 700. The Sync pin is connected to secondary winding of the transformer T. When a threshold of a first comparator 702 is reached a current generator Ir starts charging a capacitor Cr. The charge is stopped when the threshold of the first comparator 702 is crossed again in the falling edge. The resulting voltage ramp is supplied to the PWM comparator 106.

The PWM comparator 106 receives on the inverting input an error signal coming from the error amplifier 104 which receives the output from the voltage reference 102 combined with a signal coming from the over current amplifier 200. The output of the PWM comparator 106 is the input of the shoot-through protection circuit 500.

The circuit 500 has the task of providing the correct drive signals for both the controlled switch CS and the free-wheeling switch FWS connected to the terminals CTR Gate and SR Gate, respectively. By sensing the gate voltages, the circuit 500 enables turn-on of each switch some time after the other switch has been turned off. This prevents any possibility of simultaneous conduction between the two switches CS and FWS.

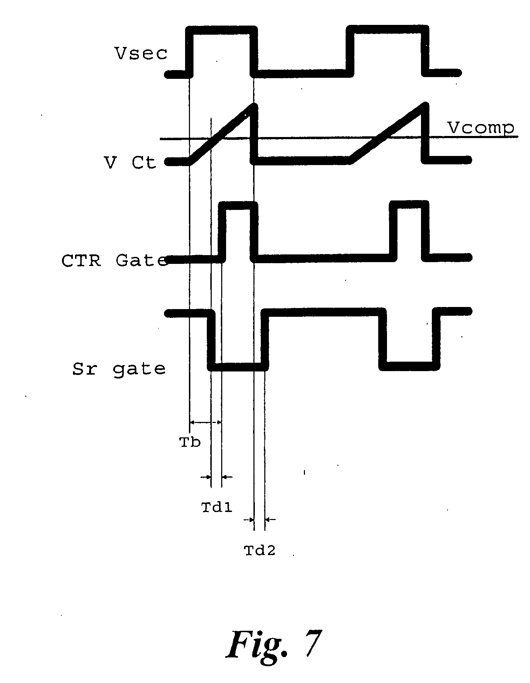

A detailed timing of the two drive signals is shown in Figure 7. The driving output stage includes a high side driving stage 300 with bootstrap for the controlled switch CS, 31 and a simple low-side driving stage 400 for the free-wheeling switch FWS, 32.

A common problem in synchronous rectified topologies is operation in the Discontinuous Conduction Mode.

During no load or light load operation the inductor current reaches zero before a new switching period begins. Using common diode rectification, this current cannot become negative because the diode itself does not allow the current to change its direction. But in synchronous rectification application, when the current reaches zero, if the synchronous MOSFET is on, the current starts to reverse flowing in the apposite direction. This, in general, is not a preferred behaviour for some reasons:
- worsening of the power consumption performance during light load and no load. This operation does not allow meeting international rules on stand-by power consumption;
- possibility to sink current from other power supplies connected in parallel.

The arrangement described herein overcomes all these drawbacks. The non-inverting input of the comparator Comp(DCM) in the block 600 is connected to the output of the over current amplifier 200, while the inverting input is supplied by a constant DCM voltage, which is available externally. The output of the Comp(DCM) is connected to driver circuit 400. When the output current is decreasing (i.e. the discontinuous mode is approaching) then the output of the current amplifier decreases. When the output voltage of the current amplifier goes below the inverting input voltage the o/p of the comparator goes low. This signal tells to the driver circuit 400 to turn completely off the free-wheeling drive signal coming from the shoot-through protection circuit 500. In this way the free-wheeling synchronous MOSFET is off and the secondary current is carried by the body-diode.

The amount of o/p current, which determines the turn-off of the free-wheeling gate, is determined by the voltage at the non inverting pin of the comparator, and can be set externally with a resistor divider connected to the reference voltage.

In the solution described herein the synchronous free-wheeling switch FWS is driven by an N-channel MOSFET and the integrated circuit takes care of driving the MOSFET in a proper way

The introduction of a free-wheeling synchronous MOSFET makes possible the output current to be reversed during light or no load condition. The circuit described is able to determine when the current is decreasing in order to turn-off the MOSFET avoiding any possibility to have reverse current. This functionality is also externally adjustable with a resistor divider.

Synchronous rectification is a common technique to increase the efficiency of the Switched Mode Power Supply. But this technique usually is quite complex to be implemented specially in isolated topologies. The arrangement described herein allows implementing this function without any efforts by the end-user, in fact, the integrated circuit is able to provide the correct drive signals in all conditions.

The arrangement disclosed is able to automatically turn off the synchronous MOSFET when the output current is low, this allow saving power and avoiding current to be sunk when other Switched Mode Power Supplies are connected in parallel to the output.

Moreover, the turn off threshold can be adjusted with a very simple circuit giving the maximum flexibility in all application conditions.

## Claims

1. A control circuit for a Pulsed Width Modulation (PWM) controller including a main controlled switch (31; CS) to selectively block an energization signal (Vₛ₁) from a switched mode power supply (T), and a free-wheeling synchronous switch (32; FWS) for selectively transferring said energization signal (Vₛ₁) as an output signal (Vₛ₂), the circuit including:
- a pulse width modulated module (100) having an input terminal (FB) for connection with said switched mode power supply (T) to achieve synchronization with said switched mode power supply (T), said pulse width modulated module (100) including a PWM comparator (106) for synchronizing said switched mode power supply (T) by comparison with a threshold;
- a drive circuit (300) for said main switch (31; CS) controlled by said PWM comparator (106);
- a low-side drive circuit (400) for said free-wheeling synchronous switch (32; FWS) controlled by said PWM comparator (106); and
- a ramp generator (700) having a synchronization terminal (Sync pin) for connection to said switched mode power supply (T), said ramp generator (700) including a comparator (702) sensing the signal on said synchronization terminal (Sync pin), said ramp generator (700) configured for being activated and deactivated on raising and falling edges of said signal on said synchronization terminal (Sync pin), the ramp signal from said ramp generator defining said threshold of said PWM comparator (106) to thereby control operation of said drive circuit (300) for said main switch (31; CS) and said low-side drive circuit (400) for said free-wheeling synchronous switch (32; FWS),
**characterized in that** said free-wheeling synchronous switch (32; FWS) is an active controlled switch, such as a synchronous MOSFET.

2. The control circuit of Claim 1, **characterized in that** it includes a protection circuit (500) interposed between said PWM comparator (106) and said main controlled switch (31; CS) and said free-wheeling synchronous switch (32; FWS), said protection circuit (500) avoiding cross conduction between said main controlled switch (31; CS) and said free-wheeling synchronous switch (32; FWS).

3. The control circuit of Claim 2, **characterized in that** said protection circuit (500) is configured for enabling turn-on of either of said main controlled switch (31; CS) and said free-wheeling synchronous switch (32; FWS) after the other of said main controlled switch (31; CS) and said free-wheeling synchronous switch (32; FWS) has been turned off.

4. The control circuit of Claim 2 or Claim 3, **characterized in that** said main controlled switch (31; CS) and said free-wheeling synchronous switch (32; FWS) are electronic switches provide with respective gates, and **in that** said protection circuit (500) senses the gate voltages of said main controlled switch (31; CS) and said free-wheeling synchronous switch (32; FWS).

5. The control circuit of any of the previous claims, **characterized in that** said pulse width modulated module (100) includes a cascaded arrangement of a voltage reference (102), an error amplifier (104) and said PWM comparator (106).

6. The control circuit of any of the previous claims, **characterized in that** it includes an amplifier such as an operational amplifier (200) for sensing an output current from said controller in an over current control arrangement and **in that** said PWM comparator (106) receives as an input also a signal coming from said operational amplifier (200).

7. The control circuit of any of the previous claims, **characterized in that** said drive circuit (300) for said main controlled switch (31; CS) includes a bootstrap terminal (Boot) to drive a N-Channel MOSFET.

8. The control circuit of any of the previous claims, **characterized in that** it includes a dedicated circuit (600) for selecting a level of said output signal (Vₛ₂) at which said free-wheeling synchronous switch (32; FWS) is enabled.

9. The control circuit of any of the previous claims, **characterized in that** it includes an internal power supply block (800) that supplies power to the whole circuit.

10. The control circuit of any of the previous claims, **characterized in that** it includes a protection circuit (900) that keeps off said main controlled switch (31; CS) when the circuit is not correctly supplied.

11. The control circuit of any of the previous claims, in the form of an integrated circuit.

## Patentansprüche

1. Steuerschaltung für eine Pulsweitenmodulations (PWM)-Steuereinrichtung beinhaltend einen gesteuerten Hauptschalter (31; CS), um in selektiver Weise ein Speisesignal (Vₛ₁) von einer geschalteten Energieversorgung (T) zu blockieren, und einen synchronen Freilaufschalter (32; FWS), um das Speisesignal (Vₛ₁) als ein Ausgangssignal (Vₛ₂) in selektiver Weise zu übertragen, wobei die Schaltung beinhaltet:
- ein pulsweitenmoduliertes Modul (100) mit einem Eingangsanschluss (FB) zur Verbindung mit der geschalteten Energieversorgung (T), um Synchronisation mit der geschalteten Energieversorgung (T) zu erreichen, wobei das pulsweitenmodulierte Modul (100) einen PWM-Komparator (106) beinhaltet, um die geschaltete Energieversorgung (T) durch Vergleich mit einem Schwellenwert zu synchronisieren;
- eine Ansteuerschaltung (300) für den Hauptschalter (31; CS), die durch den PWM-Komparator 106 gesteuert ist;
- eine niederseitige Ansteuerschaltung (400) für den synchronen Freilaufschalter (32; FWS), die durch den PWM-Komparator (106) gesteuert ist; und
- einen Rampengenerator (700) mit einem Synchronisationsanschluss (Sync pin) zur Verbindung mit der geschalteten Energieversorgung (T), wobei der Rampengenerator (700) einen Komparator (702) beinhaltet, der das Signal auf dem Synchronisationsanschluss (Sync pin) erfasst, wobei der Rampengenerator (700) konfiguriert ist auf steigende und fallende Flanken des Signals auf dem Synchronisationsanschluss (Sync pin) aktiviert und deaktiviert zu werden, wobei das Rampensignal von dem Rampengenerator den Schwellenwert des PWM-Komparators (106) definiert, um **dadurch** den Betrieb der Ansteuerschaltung (300) für den Hauptschalter (31; CS) und die niederseitige Ansteuerschaltung (400) für den synchronen Freilaufschalter (32; FWS) zu steuern,
**dadurch gekennzeichnet, dass** der synchrone Freilaufschalter (32; FWS) ein aktiv gesteuerter Schalter ist, wie zum Beispiel ein synchroner MOSFET.

2. Steuerschaltung nach Anspruch 1, **dadurch gekennzeichnet, dass** sie eine Schutzschaltung (500) beinhaltet, die zwischen den PWM-Komparator (106) und den gesteuerten Hauptschalter (31; CS) und den synchronen Freilaufschalter (32; FWS) angeordnet ist, wobei die Schutzschaltung (500) eine Querverbindung zwischen dem gesteuerten Hauptschalter (31; CS) und dem synchronen Freilaufschalter (32; FWS) vermeidet.

3. Steuerschaltung nach Anspruch 2, **dadurch gekennzeichnet, dass** die Schutzschaltung (500) konfiguriert ist, um ein Einschalten von einem von dem gesteuerten Hauptschalter (31; CS) und dem synchronen Freilaufschalter (32; FWS) zu ermöglichen, nachdem der andere von dem gesteuerten Hauptschalter (31; CS) und dem synchronen Freilaufschalter (32; FWS) abgeschaltet wurde.

4. Steuerschaltung nach Anspruch 2 oder 3, **dadurch gekennzeichnet, dass** der gesteuerte Hauptschalter (31; CS) und der synchrone Freilaufschalter (32; FWS) elektronische Schalter mit jeweiligen Gates sind, und dass die Schutzschaltung (500) die Gatespannungen des gesteuerten Hauptschalters (31; CS) und des synchronen Freilaufschalters (32; FWS) erfasst.

5. Steuerschaltung nach einem der vorhergehenden Ansprüche, **dadurch gekennzeichnet, dass** das pulsweitenmodulierte Modul (100) eine kaskadierte Anordnung aus einer Spannungsreferenz (102), einem Fehlerverstärker (104) und dem PWM-Komparator (106) beinhaltet.

6. Steuerschaltung nach einem vorhergehenden Ansprüche, **dadurch gekennzeichnet, dass** sie einen Verstärker wie zum Beispiel einen Operationsverstärker (200) beinhaltet zum Erfassen eines Ausgangsstroms von der Steuereinrichtung in einer Überstrom-Steueranordnung, und dass der PWM-Komparator (106) als eine Eingabe ebenso ein Signal von dem Operationsverstärker (200) empfängt.

7. Steuerschaltung nach einem der vorhergehenden Ansprüche, **dadurch gekennzeichnet, dass** die Ansteuerschaltung (300) für den gesteuerten Hauptschalter (31; CS) einen Bootstrap-Anschluss (Boot) beinhaltet, um einen N-Kanal-MOSFET anzusteuern.

8. Steuerschaltung nach einem der vorhergehenden Ansprüche, **dadurch gekennzeichnet, dass** sie eine dedizierte Schaltung (600) beinhaltet zur Auswahl eines Niveaus des Ausgangssignals (Vₛ₂), an welcher der synchrone Freilaufschalter (32; FWS) aktiviert wird.

9. Steuerschaltung nach einem der vorhergehenden Ansprüche, **dadurch gekennzeichnet, dass** sie einen internen Energieversorgungsblock (800) beinhaltet, der Energie an die gesamte Schaltung bereitstellt.

10. Steuerschaltung nach einem der vorhergehenden Ansprüche, **dadurch gekennzeichnet, dass** sie eine Schutzschaltung (900) beinhaltet, die den gesteuerten Hauptschalter (31; CS) im Aus-Zustand hält, wenn die Schaltung nicht korrekt versorgt wird.

11. Steuerschaltung nach einem der vorhergehenden Ansprüche in Form einer integrierten Schaltung.

## Revendications

1. Circuit de commande pour contrôleur de Modulation en Largeur d'Impulsion (MLI) comprenant un interrupteur commandé principal (31 ; CS) pour bloquer de manière sélective un signal d'alimentation (Vₛ₁) provenant d'une alimentation à découpage (T), et un interrupteur synchrone de roue libre (32 ; FWS) pour transférer de manière sélective ledit signal d'alimentation (Vₛ₁) sous la forme d'un signal de sortie (Vₛ₂), le circuit comprenant :
- un module modulé en largeur d'impulsion (100) ayant une borne d'entrée (FB) permettant la connexion avec ladite alimentation à découpage (T) pour réaliser la synchronisation avec ladite alimentation à découpage (T), ledit module modulé en largeur d'impulsion (100) comprenant un comparateur MLI (106) pour synchroniser ladite alimentation à découpage (T) par comparaison avec un seuil ;
- un circuit d'attaque (300) pour ledit interrupteur principal (31 ; CS) commandé par ledit comparateur MLI (106) ;
- un circuit d'attaque de côté à bas potentiel (400) pour ledit interrupteur synchrone de roue libre (32 ; FWS) commandé par ledit comparateur MLI (106) ; et
- un générateur de rampe (700) ayant une borne de synchronisation (broche Sync) destinée à être connectée à ladite alimentation à découpage (T), ledit générateur de rampe (700) comprenant un comparateur (702) qui mesure le signal sur ladite borne de synchronisation (broche Sync), ledit générateur de rampe (700) étant configuré pour être activé et désactivé sur les fronts montants et descendants dudit signal présent sur ladite borne de synchronisation (broche Sync), le signal de rampe provenant dudit générateur de rampe définissant ledit seuil dudit comparateur MLI (106) pour commander ainsi le fonctionnement dudit circuit d'attaque (300) pour ledit interrupteur principal (31 ; CS) et dudit circuit d'attaque de côté à bas potentiel (400) pour ledit interrupteur synchrone de roue libre (32 ; FWS),
**caractérisé en ce que** ledit interrupteur synchrone de roue libre (32 ; FWS) est un interrupteur commandé actif, comme un transistor MOSFET synchrone.

2. Circuit de commande selon la revendication 1, **caractérisé en ce qu'**il comprend un circuit de protection (500) intercalé entre ledit comparateur MLI (106) et ledit interrupteur commandé principal (31 ; CS) et ledit interrupteur synchrone de roue libre (32 ; FWS), ledit circuit de protection (500) évitant la conduction croisée entre ledit interrupteur commandé principal (31 ; CS) et ledit interrupteur synchrone de roue libre (32 ; FWS).

3. Circuit de commande selon la revendication 2, **caractérisé en ce que** ledit circuit de protection (500) est configuré pour permettre le déblocage de l'un ou l'autre desdits interrupteur commandé principal (31 ; CS) et interrupteur synchrone de roue libre (32 ; FWS) après que l'autre desdits interrupteur commandé principal (31 ; CS) et interrupteur synchrone de roue libre (32 ; FWS) a été bloqué.

4. Circuit de commande selon la revendication 2 ou 3, **caractérisé en ce que** ledit interrupteur commandé principal (31 ; CS) et ledit interrupteur synchrone de roue libre (32 ; FWS) sont des interrupteurs électroniques munis de grilles respectives, et **en ce que** ledit circuit de protection (500) mesure les tensions de grille dudit interrupteur commandé principal (31 ; CS) et dudit interrupteur synchrone de roue libre (32 ; FWS).

5. Circuit de commande selon l'une quelconque des revendications précédentes, **caractérisé en ce que** ledit module modulé en largeur d'impulsion (100) comprend un montage en cascade constitué d'une référence de tension (102), d'un amplificateur d'erreur (104) et dudit comparateur MLI (106).

6. Circuit de commande selon l'une quelconque des revendications précédentes, **caractérisé en ce qu'**il comprend un amplificateur tel qu'un amplificateur opérationnel (200) pour mesurer un courant de sortie provenant dudit contrôleur dans un montage de contrôle de surintensité et **en ce que** ledit comparateur MLI (106) reçoit en entrée aussi un signal provenant dudit amplificateur opérationnel (200).

7. Circuit de commande selon l'une quelconque des revendications précédentes, **caractérisé en ce que** ledit circuit d'attaque (300) pour ledit interrupteur commandé principal (31 ; CS) comporte une borne autoélévatrice (Boot) pour attaquer un transistor MOSFET à canal N.

8. Circuit de commande selon l'une quelconque des revendications précédentes, **caractérisé en ce qu'**il comprend un circuit dédié (600) pour choisir un niveau dudit signal de sortie (Vₛ₂) auquel ledit interrupteur synchrone de roue libre (32 ; FWS) est validé.

9. Circuit de commande selon l'une quelconque des revendications précédentes, **caractérisé en ce qu'**il comprend un bloc d'alimentation interne (800) qui fournit du courant à tout le circuit.

10. Circuit de commande selon l'une quelconque des revendications précédentes, **caractérisé en ce qu'**il comprend un circuit de protection (900) qui maintient bloqué ledit interrupteur commandé principal (31 ; CS) lorsque le circuit n'est pas correctement alimenté.

11. Circuit de commande selon l'une quelconque des revendications précédentes, sous la forme d'un circuit intégré.
